# FASCICULE DE BREVET EUROPEEN

(11) **EP 2 050 607 B1**
(45) Date de publication et mention de la délivrance du brevet: **28.07.2010**
(21) Numéro de dépôt: 08165053.3
(22) Date de dépôt: 25.09.2008
(51) Int. Cl.: B60J 10/00, B60R 21/34, B62D 25/12, F16J 15/02, B60R 13/06

(54) **Joint linéaire d'étanchéité et véhicule automobile comprenant un tel joint**
Lineares Dichtungselement und Kraftfahrzeug, das mit einer solchen Dichtung ausgestattet ist
Linear sealing gasket and automobile comprising such a gasket

(30) Priorité: 16.10.2007 FR 0758357
(43) Date de publication de la demande: 22.04.2009
(73) Titulaire: Peugeot Citroën Automobiles SA, 78140 Vélizy-Villacoublay (FR)
(72) Inventeur: Pezeril, Stéphane, 92310, SEVRES (FR); Mathou, Laurent, 94220 CHARENTON LE PONT (FR)

(56) Documents cités:
- EP-A- 1 241 037
- DE-A1- 10 316 519
- DE-U1-202006 001 725
- FR-A- 2 607 216
- FR-A- 2 623 761
- FR-A- 2 857 303

## Description

La présente invention concerne un joint linéaire d'étanchéité, ainsi qu'un véhicule automobile comprenant un tel joint.

Il est connu de l'état de la technique un joint linéaire d'étanchéité s'étendant le long d'une ligne directrice, du type comprenant :
- un joint tubulaire comportant :
   + un support s'étendant le long de la ligne directrice et adapté pour être monté sur une tranche de plaque, et
   + une enveloppe tubulaire déformable s'étendant le long de la ligne directrice et solidaire du support, l'enveloppe tubulaire déformable présentant une surface extérieure, et
- un bloc de mousse (40) rapporté sur au moins une partie de la surface extérieure de l'enveloppe tubulaire déformable.

On connaît de tels joints des documents FR-A-2607216 ou EP-A-1241037.

Un tel joint linéaire d'étanchéité est en particulier utilisé pour assurer l'étanchéité, dans un véhicule automobile, entre l'auvent et la bordure arrière du capot moteur. A cet effet, le support du joint tubulaire est monté sur la tranche supérieure de l'auvent.

Le joint linéaire d'étanchéité précédent a comme inconvénient d'être relativement rigide et de ne permettre qu'un faible enfoncement du capot en cas de choc piéton.

Ainsi, l'invention a pour but de proposer un joint linéaire d'étanchéité apte à permettre un enfoncement important de la pièce avec laquelle le joint linéaire d'étanchéité assure l'étanchéité.

A cet effet, l'invention a pour objet un joint linéaire d'étanchéité du type précité, caractérisé en ce :
l'enveloppe tubulaire déformable est percée d'ouvertures espacées le long de la ligne directrice, et le bloc de mousse s'étend au travers des ouvertures et à l'intérieur de l'enveloppe tubulaire déformable ;

Selon d'autres caractéristiques de l'invention :
- l'enveloppe tubulaire déformable est constituée d'un matériau en alliage polypropylène cellulaire, et le bloc de mousse est constitué d'un matériau cellulaire avec cellules semi-ouvertes en polyuréthane ;
- le support comporte une rainure d'introduction de la plaque, la rainure s'étendant le long de la ligne directrice.

L'invention a également pour objet un véhicule automobile, du type comprenant :
- un auvent s'étendant transversalement dans le véhicule automobile, et délimitant, vers l'avant du véhicule automobile, un espace de réception d'un moteur et, vers l'arrière du véhicule automobile, un habitacle, l'auvent étant muni d'une tranche supérieure comprenant une partie centrale et une partie latérale située d'un côté du véhicule automobile,
- un joint tubulaire central s'étendant sur la partie centrale comportant :
   + un support s'étendant le long de la partie centrale monté sur cette partie centrale ;
   + une enveloppe tubulaire déformable s'étendant le long de la partie centrale et solidaire du support ;
- un capot moteur apte à pivoter par rapport à l'auvent entre une position relevée et une position fermée sur l'espace de réception du moteur,
   le véhicule automobile étant **caractérisé en ce qu**'il comprend :
- monté sur la partie latérale de la tranche supérieure, un joint linéaire d'étanchéité selon l'invention, et en ce que
- le capot moteur en position fermée repose à la fois sur le joint tubulaire central et sur le bloc de mousse du joint linéaire d'étanchéité, de manière à assurer l'étanchéité entre le capot moteur et l'auvent.

Selon d'autres caractéristiques de l'invention :
- la partie centrale de la tranche supérieure forme un palier central, tandis que la partie latérale forme un palier latéral situé plus bas que le palier central ;
- le bloc de mousse du joint linéaire d'étanchéité rejoint sensiblement l'enveloppe tubulaire déformable du joint tubulaire central, de sorte que le joint linéaire d'étanchéité soit dans la continuité du joint tubulaire central ;
- le bloc de mousse comprend une partie avant s'étendant vers l'avant et rapporté sur une face avant du joint tubulaire du joint linéaire d'étanchéité ;
- la partie avant du bloc de mousse recouvre un boîtier électrique ;
- le véhicule automobile comprend une grille d'auvent, et le bloc de mousse comprend une partie arrière s'étendant le long de la partie latérale, et se projetant vers l'arrière, afin de venir reposer sur la grille d'auvent, de manière à assurer l'étanchéité avec cette grille d'auvent.

L'invention sera mieux comprise à l'aide de la description qui va suivre, donnée uniquement à titre d'exemple et faite en se référant aux dessins annexés, parmi lesquels :
- la figure 1 est une vue en perspective d'un capot et d'un auvent de véhicule automobile comprenant un joint linéaire d'étanchéité ;
- la figure 2 est une vue en coupe du joint linéaire d'étanchéité ; et
- la figure 3 est une vue en perspective du joint linéaire d'étanchéité, avec un arrachement partiel.

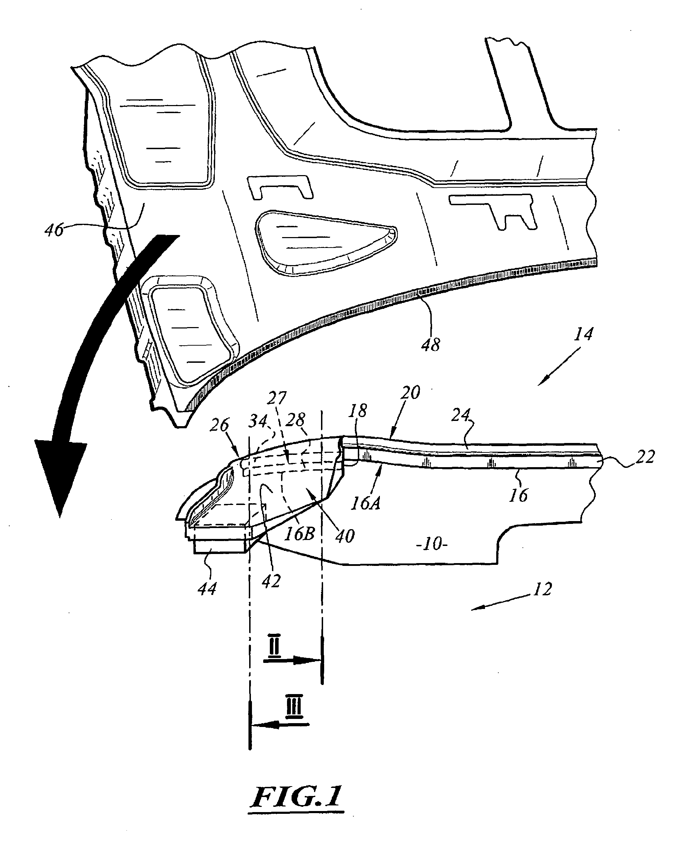

En référence à la figure 1, il a été représenté un auvent 10 de véhicule automobile. L'auvent 10 à la forme générale d'une plaque verticale s'étendant transversalement dans le véhicule automobile. L'auvent 10 délimite, vers l'avant du véhicule automobile, un espace 12 de réception d'un moteur et, vers l'arrière du véhiculé automobile, un habitacle 14. L'auvent 10 est muni d'une tranche supérieure 16 comprenant une partie centrale 16A et deux parties latérales 16B, situées respectivement sur la droite et sur la gauche du véhicule automobile. Sur la figure 1, seule la partie latérale droite 16B est visible. La partie centrale 16A forme un palier central, tandis que les parties latérales 16B forment chacune un palier latéral situé plus bas que le palier formé par la partie centrale 16A. Chaque partie latérale 16B est reliée à la partie centrale 16A par un épaulement 18. L'épaulement 18 a une hauteur comprise entre 5 et 15 centimètres, de préférence 10 centimètres.

Le véhicule automobile comprend un joint tubulaire central 20 s'étendant sur la partie centrale 16A de la tranche supérieure 16 de l'auvent 10. Le joint tubulaire central 20 comporte un support 22 s'étendant le long de la partie centrale 16A et monté sur cette partie centrale 16A. Le joint tubulaire central 20 comprend en outre une enveloppe tubulaire déformable 24, solidaire du support 22 et s'étendant le long de la partie centrale 16A.

Le véhicule automobile comprend en outre, sur chaque partie latérale 16B, un joint linéaire d'étanchéité 26.

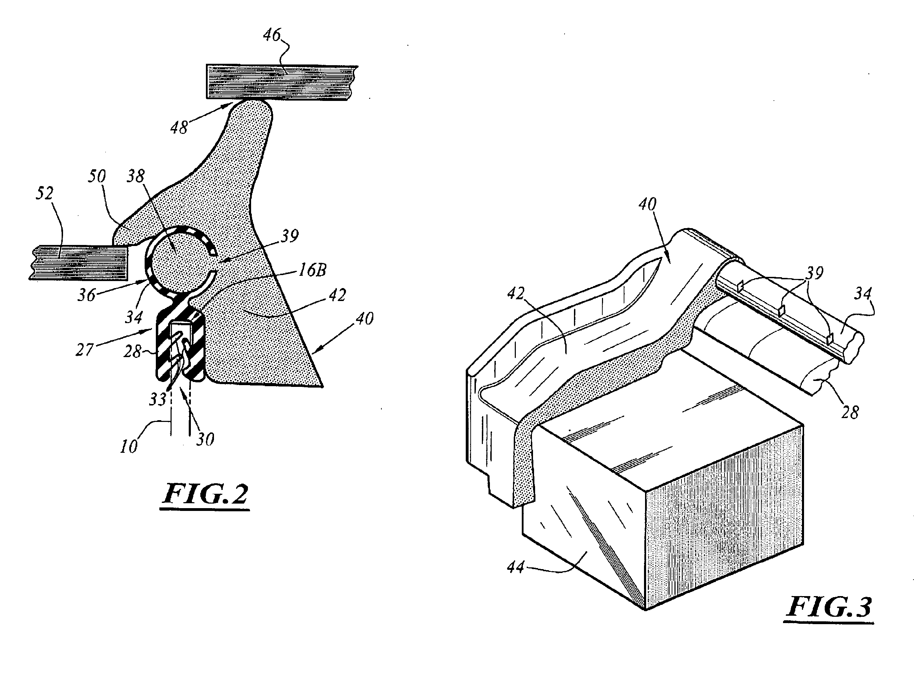

En référence aux figures 1, 2 et 3, le joint linéaire d'étanchéité 26 comprend tout d'abord un joint tubulaire 27. Ce joint tubulaire 27 comprend un support 28 s'étendant le long de la partie latérale 16B et monté sur cette partie latérale 16B. Plus précisément, le support 28 comporte une rainure 30 d'introduction de l'auvent 10. De préférence, des ailettes anti-retour 33 sont prévues dans la rainure 30, afin d'empêcher le démontage intempestif du joint tubulaire 28.

Le joint tubulaire 27 comprend en outre une enveloppe tubulaire déformable 34, solidaire du support 28 et s'étendant le long de la partie latérale 16B. L'enveloppe tubulaire déformable 34 présente une surface extérieure 36 et délimite un espace cylindrique intérieur 38. L'enveloppe tubulaire déformable 34 est percée d'ouvertures 39 espacés le long de la partie latérale 16B de la tranche supérieure 16.

Le joint linéaire d'étanchéité 26 comprend en outre un bloc de mousse 40 rapporté sur le joint tubulaire 27. Le bloc de mousse 40 est ainsi rapporté sur la face supérieure de l'enveloppe tubulaire déformable 34, ainsi que sur la face avant (dirigée vers l'espace de réception du moteur) du joint tubulaire 27, à la fois sur la face avant de l'enveloppe tubulaire déformable 34 et sur la face avant du support 28.

Le bloc de mousse 40 comprend ainsi une partie 42 s'étendant vers l'avant, et qui recouvre la face avant du joint tubulaire 27.

Cette partie avant 42 est plus avancée sur le côté du véhicule, que vers le centre du véhicule automobile, de manière à recouvrir un boîtier électrique 44 situé sur le côté du véhicule.

Le bloc de mousse 40 s'étend au travers des ouvertures 39 et à l'intérieur de l'enveloppe tubulaire déformable 34. De préférence, le bloc de mousse 40 remplit entièrement l'espace cylindrique intérieure 38. Ainsi, le bloc de mousse 40 est solidement attaché au joint tubulaire 27.

Le bloc de mousse 40 rejoint sensiblement l'enveloppe tubulaire déformable 24 du joint tubulaire central 20, de sorte que le joint linéaire d'étanchéité 26 soit dans la continuité du joint tubulaire central 20 (leurs surfaces supérieures se rejoignent).

De préférence, l'enveloppe tubulaire présente une dureté shore A comprise entre 50 et 60°, tandis que le bloc de mousse 40 présente une dureté shore A comprise entre 5° et 20 °.

Par exemple, l'enveloppe tubulaire déformable 34 est constituée d'un matériau en EPDM cellulaire, le bloc de mousse 40 est constitué d'un matériau cellulaire avec cellules semi-ouvertes en polyuréthane, et le support 28 est constitué d'un matériau en EPDM compact.

Le véhicule automobile comprend en outre un capot moteur 46 apte à pivoter par rapport à l'auvent 10 autour d'une direction transversale au véhicule et sensiblement parallèle à la tranche supérieure 16 de l'auvent 10. Une bordure arrière 48 du capot du moteur 46, en position fermée, repose à la fois sur le joint tubulaire central 20 et sur le bloc de mousse 40 du joint linéaire d'étanchéité 26. Ainsi, l'étanchéité, à la fois hydraulique et acoustique, est assurée entre le capot moteur 46 et l'auvent 10. En outre, grâce à la présence du bloc de mousse sur le côté, la réponse du capot moteur 46 à un choc piéton est amélioré.

Plus précisément, le capot peut se déformer au niveau du bloc de mousse lors d'un choc piéton.

La conception intégrale du joint tubulaire 27 et du bloc de mousse 40 facilite sa fabrication et rend l'assemblage économique.

Le bloc de mousse 40 comprend en outre une partie arrière 50 s'étendant le long de la partie latérale 16B de la tranche supérieure 16, et se projetant vers l'arrière, afin de venir reposer sur une grille d'auvent 52 du véhicule automobile, de manière à assurer l'étanchéité avec cette grille d'auvent 52.

## Revendications

1. Joint linéaire d'étanchéité s'étendant le long d'une ligne directrice, du type comprenant :
- un joint tubulaire (27) comportant :
+ un support (28) s'étendant le long de la ligne directrice et adapté pour être monté sur une tranche (16B) de plaque, et
+ une enveloppe tubulaire déformable (34) s'étendant le long de la ligne directrice et solidaire du support, l'enveloppe tubulaire déformable présentant une surface extérieure, et
- un bloc de mousse (40) rapporté sur au moins une partie de la surface extérieure de l'enveloppe tubulaire déformable,
le joint linéaire d'étanchéité étant **caractérisé en ce que** :
- l'enveloppe tubulaire déformable (34) est percée d'ouvertures (39) espacées le long de la ligne directrice ; et
- le bloc de mousse (40) s'étend au travers des ouvertures (39) et à l'intérieur de l'enveloppe tubulaire déformable (34).

2. Joint linéaire d'étanchéité selon la revendication 1, **caractérisé en ce que**:
- l'enveloppe tubulaire déformable (34) est constituée d'un matériau en alliage polypropylène cellulaire ; et
- le bloc de mousse (40) est constitué d'un matériau cellulaire avec cellules semi-ouvertes en polyuréthane.

3. Joint linéaire d'étanchéité selon la revendication 1 ou 2, **caractérisé en ce que** le support (28) comporte une rainure (30) d'introduction de la plaque, la rainure (30) s'étendant le long de la ligne directrice.

4. Véhicule automobile, du type comprenant :
- un auvent (10) s'étendant transversalement dans le véhicule automobile, et délimitant, vers l'avant du véhicule automobile, un espace (12) de réception d'un moteur et, vers l'arrière du véhicule automobile, un habitacle (14), l'auvent (10) étant muni d'une tranche supérieure (16) comprenant une partie centrale (16A) et une partie latérale (16B) située d'un côté du véhicule automobile,
- un joint tubulaire central (20) s'étendant sur la partie centrale (16A) comportant :
+ un support (22) s'étendant le long de la partie centrale (16A) et monté sur cette partie centrale (16A) ;
+ une enveloppe tubulaire déformable (24) s'étendant le long de la partie centrale (16A) et solidaire du support (22) ;
- un capot moteur (46) apte à pivoter par rapport à l'auvent (10) entre une position relevée et une position fermée sur l'espace (12) de réception du moteur, le véhicule automobile étant **caractérisé en ce qu'**il comprend :
- monté sur la partie latérale (16B) de la tranche supérieure (16), un joint linéaire d'étanchéité selon l'une quelconque des revendications 1 à 3, et **en ce que**
- le capot moteur (46) en position fermée repose à la fois sur le joint tubulaire central (20) et sur le bloc de mousse (40) du joint linéaire d'étanchéité, de manière à assurer l'étanchéité entre le capot moteur (46) et l'auvent (10).

5. Véhicule automobile selon la revendication 4, **caractérisé en ce que** la partie centrale (16A) de la tranche supérieure (16) forme un palier central, tandis que la partie latérale (16B) forme un palier latéral situé plus bas que le palier central.

6. Véhicule automobile selon la revendication 4 ou 5, **caractérisé en ce que** le bloc de mousse (40) du joint linéaire d'étanchéité rejoint sensiblement l'enveloppe tubulaire déformable (24) du joint tubulaire central (20), de sorte que le joint linéaire d'étanchéité (26) soit dans la continuité du joint tubulaire central (20).

7. Véhicule automobile selon la revendication 5 ou 6, **caractérisé en ce que** le bloc de mousse (40) comprend une partie avant (42) s'étendant vers l'avant et rapporté sur une face avant du joint tubulaire du joint linéaire d'étanchéité.

8. Véhicule automobile selon la revendication 7, **caractérisé en ce que** la partie avant (42) du bloc de mousse (40) recouvre un boîtier électrique (44).

9. Véhicule automobile selon l'une quelconque des revendications 4 à 8, **caractérisé en ce qu'**il comprend une grille d'auvent (52), et **en ce que** le bloc de mousse (40) comprend une partie arrière (50) s'étendant le long de la partie latérale (16B), et se projetant vers l'arrière, afin de venir reposer sur la grille d'auvent (52), de manière à assurer l'étanchéité avec cette grille d'auvent (52).

## Claims

1. Linear tightness joint extending along a guideline, of the type comprising:
- a tubular joint (27) comprising:
+ a support (28) extending along the guideline and suited to be mounted on a section (16B) of plate, and
+ a deformable tubular envelope (34) extending along the guideline and integral with the support, the deformable tubular envelope having an exterior surface, and
- a foam block (40) joined on at least a part of the exterior surface of the deformable tubular envelope,
the linear tightness joint being **characterized in that**:
- the deformable tubular envelope (34) is perforated by openings (39) spaced along the guideline; and
- the foam block (40) extends through the openings (39) and inside the deformable tubular envelope (34).

2. Linear tightness joint according to Claim 1, **characterized in that**:
- the deformable tubular envelope (34) is made of a material of cellular propylene alloy; and
- the foam block (40) is made of a cellular material with semi-open cells of polyurethane.

3. Linear tightness joint according to Claim 1 or 2, **characterized in that** the support (28) comprises a groove (30) for introduction of the plate, the groove (30) extending along the guideline.

4. Automobile vehicle, of the type comprising:
- a cowl (10) extending transversely in the automobile vehicle, and delimiting towards the front of the automobile vehicle a space (12) to hold an engine and, towards the rear of the automobile vehicle, a passenger compartment (14), the cowl (10) being provided with an upper section (16) comprising a central part (16A) and a lateral part (16B) situated on one side of the automobile vehicle,
- a central tubular joint (20) extending on the central part (16A) comprising:
+ a support (22) extending along the central part (16A) and mounted on this central part (16A);
+ a deformable tubular envelope (24) extending along the central part (16A) and integral with the support (22);
- a bonnet (46) able to pivot with respect to the cowl (10) between a raised position and a closed position on the space (12) for holding the engine,
the automobile vehicle being **characterized in that** it comprises:
- mounted on the lateral part (16B) of the upper section (16), a linear tightness joint according to any one of Claims 1 to 3, and **in that**
- the bonnet (46) in closed position rests both on the central tubular joint (20) and on the foam block (40) of the linear tightness joint, so as to ensure the tightness between the bonnet (46) and the cowl (10).

5. Automobile vehicle according to Claim 4, **characterized in that** the central part (16A) of the upper section (16) forms a central bearing, whilst the lateral part (16B) forms a lateral bearing situated lower than the central bearing.

6. Automobile vehicle according to Claim 4 or 5, **characterized in that** the foam block (40) of the linear tightness joint substantially joins the deformable tubular envelope (24) of the central tubular joint (20), such that the linear tightness joint (26) is in the continuity of the central tubular joint (20).

7. Automobile vehicle according to Claim 5 or 6, **characterized in that** the foam block (40) comprises a front part (42) extending towards the front and joined on a front face of the tubular joint of the linear tightness joint.

8. Automobile vehicle according to Claim 7, **characterized in that** the front part (42) of the foam block (40) covers an electric box (44).

9. Automobile vehicle according to any one of Claims 4 to 8, **characterized in that** it comprises a cowl grid (52), and **in that** the foam block (40) comprises a rear part (50) extending along the lateral part (16B), and projecting towards the rear, so as to come to rest on the cowl grid (52), so as to ensure the tightness with this cowl grid (52).

## Patentansprüche

1. Lineare Dichtung, die sich entlang einer Leitlinie erstreckt, des Typs, der Folgendes aufweist:
- eine röhrenförmige Dichtung (27), die Folgendes aufweist:
+ einen Träger (28), der sich entlang der Leitlinie erstreckt und auf einen Plattenabschnitt (16B) montiert werden kann, und
+ eine verformbare röhrenförmige Hülle (34), die sich entlang der Leitlinie erstreckt und mit dem Träger fest verbunden ist, wobei die verformbare röhrenförmigen Hülle eine Außenfläche aufweist, und
- einen Schaumstoffblock (40), der auf mindestens einem Teil der Außenfläche der verformbaren röhrenförmigen Hülle angebaut ist,
wobei die lineare Dichtung **dadurch gekennzeichnet ist, dass**:
- die verformbare röhrenförmige Hülle (34) von Öffnungen (39) durchbohrt ist, die entlang der Leitlinie beabstandet sind; und
- sich der Schaumstoffblock (40) durch Öffnungen (39) und im Inneren der verformbaren röhrenförmigen Hülle (34) erstreckt.

2. Lineare Dichtung nach Anspruch 1, **dadurch gekennzeichnet, dass:**
- die verformbare röhrenförmige Hülle (34) aus einem Werkstoff aus zelliger Polypropylenlegierung besteht; und
- der Schaumstoffblock (40) aus einem zelligen Werkstoff mit halb offenen Zellen aus Polyurethan besteht.

3. Lineare Dichtung nach Anspruch 1 oder 2, **dadurch gekennzeichnet, dass** der Träger (28) eine Rille (30) zum Einführen der Platte aufweist, wobei sich die Rille (30) entlang der Leitlinie erstreckt.

4. Kraftfahrzeug des Typs, der Folgendes aufweist:
- einen Karosserievorbau (10), der sich quer in dem Kraftfahrzeug erstreckt und zur Vorderseite des Kraftfahrzeugs hin einen Raum (12) zum Aufnehmen eines Motors und zur Rückseite des Kraftfahrzeugs eine Fahrgastzelle (14) abgrenzt, wobei der Karosserievorbau (10) mit einem oberen Abschnitt (16) versehen ist, der einen zentralen Teil (16A) und einen seitlichen Teil (16B), der sich auf einer Seite des Kraftfahrzeugs befindet, aufweist,
- eine zentrale röhrenförmige Dichtung (20), die sich auf dem zentralen Teil (16A) erstreckt und Folgendes aufweist:
+ einen Träger (22), der sich entlang des zentralen Teils (16A) erstreckt und auf diesen zentralen Teil (16A) montiert ist;
+ eine verformbare röhrenförmige Hülle (24), die sich entlang des zentralen Teils (16A) erstreckt und fest mit dem Träger (22) verbunden ist;
- eine Motorhaube (46), die in Bezug zu dem Karosserievorbau (10) zwischen einer auf dem Raum (12) zum Aufnehmen des Motors angehobenen und einer geschlossenen Position schwenken kann,
Kraftfahrzeug **dadurch gekennzeichnet, dass** es Folgendes aufweist:
- auf einen seitlichen Teil (16B) des oberen Abschnitts (16) montiert eine lineare Dichtung nach einem der Ansprüche 1 bis 3, und dass
- die Motorhaube (46) in geschlossene Position gleichzeitig auf der zentralen röhrenförmigen Dichtung (20) und dem Schaumstoffblock (40) der linearen Dichtung derart aufliegt, dass die Abdichtung zwischen der Motorhaube (46) und dem Karosserievorbau (10) sichergestellt ist.

5. Kraftfahrzeug nach Anspruch 4, **dadurch gekennzeichnet, dass** der zentrale Teil (16A) des oberen Abschnitts (16) eine zentrale Stufe bildet, während der seitliche Teil (16B) eine seitliche Stufe bildet, die niedriger ist als die zentrale Stufe.

6. Kraftfahrzeug nach Anspruch 4 oder 5, **dadurch gekennzeichnet, dass** der Schaumstoffblock (40) der linearen Dichtung im Wesentlichen die verformbare röhrenförmige Hülle (24) der zentralen röhrenförmigen Dichtung (20) derart trifft, dass sich die lineare Dichtung (26) in der Kontinuität der zentralen röhrenförmigen Dichtung (20) befindet.

7. Kraftfahrzeug nach Anspruch 5 oder 6, **dadurch gekennzeichnet, dass** der Schaumstoffblock (40) einen vorderen Teil (42) aufweist, der sich nach vorn erstreckt und auf einer Vorderseite der röhrenförmigen Dichtung der linearen Dichtung angebaut ist.

8. Kraftfahrzeug nach Anspruch 7, **dadurch gekennzeichnet, dass** der vordere Teil (42) des Schaumstoffblocks (40) ein Elektrogehäuse (44) abdeckt.

9. Kraftfahrzeug nach einem der Ansprüche 4 bis 8, **dadurch gekennzeichnet, dass** es ein Karosserievorbaugitter (52) aufweist, und dass der Schaumstoffblock (40) einen hinteren Teil (50) aufweist, der sich entlang des seitlichen Teils (16B) erstreckt und nach hinten vorsteht, um auf dem Karosserievorbaugitter (52) so zu ruhen, dass die Abdichtung mit diesem Karosserievorbaugitter (52) sichergestellt ist.
